# FASCICULE DE BREVET EUROPEEN

(11) **EP 0 530 120 B1**
(45) Date de publication et mention de la délivrance du brevet: **06.12.1995**
(21) Numéro de dépôt: 92420283.1
(22) Date de dépôt: 25.08.1992
(51) Int. Cl.: B29C 70/00

(54) **Armature textile tubulaire pour le renforcement de matériaux et dispositif pour sa fabrication**
Textile schlauchförmige Bewehrung für Materialverstärkung und Vorrichtung zu ihrer Herstellung
Textile tubular armature for reinforcement of materials and device for its manufacture

(30) Priorité: 27.08.1991 FR 9110894
(43) Date de publication de la demande: 03.03.1993
(73) Titulaire: C.R.S.T. (S.A.), F-21350 Vitteaux (FR)
(72) Inventeur: Mathieu, Laurent, F-21350 Gissey le Vieil (FR)
(74) Mandataire: Dupuis, François

(56) Documents cités:
- DE-A- 3 304 345
- FR-A- 2 395 340
- FR-A- 2 510 624
- FR-A- 2 568 275
- FR-A- 2 591 240
- US-A- 4 346 741
- US-A- 4 845 963

## Description

L'invention concerne une armature textile tubulaire pour le renforcement de matériaux, telles que les matières plastique composites ; elle se rapporte également à un dispositif pour la fabrication de cette armature.

Il est bien connu dans l'industrie des matériaux composites, de renforcer des matières plastiques ou analogues par des armatures textiles tubulaires notamment (US-A-4346741). Comme on le sait, les caractéristiques du matériau composite final obtenu, tiennent compte essentiellement du positionnement du fil de renfort dans la pièce.

Le plus généralement, à ce jour, pour obtenir des matériaux à haute performance, on fait appel à des découpes de tissu du positionnement semi-manuel, dont la reproductibilité est parfois aléatoire.

Pour obtenir des armatures multidirectionnelles, on réalise un empilement de nappes élémentaires unidirectionnelles, réunies entre elles par des fils de liage. Toutefois, cette piqûre de liage est aléatoire et traverse fréquemment les mèches ou les fils de chaque nappe unidirectionnelle, ce qui nuit à la déformation de l'ensemble en empêchant le glissement des fils les uns par rapport aux autres.

L'invention pallie à ces inconvénients. Elle vise une armature textile tubulaire du type en question, qui soit réalisable de manière économique et automatique, et dans laquelle les fils peuvent glisser les uns par rapport aux autres.

Cette armature textile tubulaire pour le renforcement des matériaux, constituée par un empilement de nappes successives de fils parallèles et liées entre elles, se caractérise en ce qu'elle comprend :
- une première nappe cylindrique unidirectionnelle formée d'une pluralité de fils parallèles jointifs disposés en hélice par rapport à l'axe longitudinal du cylindre ;
- au moins une deuxième nappe cylindrique unidirectionnelle, également formée d'une pluralité de fils parallèles jointifs disposés en hélice, mais dont le pas est de sens contraire au pas de l'hélice défini par la première nappe ;
- une pluralité de fils de liage, disposés parallèlement à la génératrice du cylindre défini par ces deux nappes, pour lier entre elles les fils de renfort de la première et de la deuxième nappe, sans toutefois perforer ou traverser lesdits fils de renfort.

En d'autres termes, l'invention consiste à réaliser une armature textile tubulaire constituée d'au moins deux nappes cylindriques unidirectionnelles, dont les fils sont inclinés par rapport à l'axe du cylindre, mais de pas inverse, et dans laquelle le liage est réalisé sans perforer ou traverser les fils de chaque nappe, ce qui autorise alors un certain glissement des fils d'une nappe par rapport à l'autre, donc une déformation de l'ensemble.

Avantageusement, en pratique:
- les pas de l'hélice de la première et de la deuxième nappes sont inverses en étant égaux ou non;
- l'ensemble peut comprendre une troisième nappe de fils de renfort jointifs parallèles entre eux et à la génératrice du cylindre, disposés entre la première et la deuxième nappe, l'ensemble étant également lié par les mêmes fils de liage ;
- l'ensemble peut comporter également une quatrième nappe de fils jointifs enroulés en hélice ;
Cette nappe peut être formée par le bobinage d'un fil de renfort à spires jointives perpendiculaire aux génératrices du cylindre et lié à l'ensemble par les fils de liage.

La nouvelle armature textile tubulaire conforme à l'invention se distingue de l'état de la technique par deux propriétés nouvelles, à savoir :
- tout d'abord, la faculté de déformation de l'ensemble, ce qui autorise une variation du diamètre de la structure tubulaire et qui permet de réaliser par exemple, des formes coniques, des épaulements sur un tube en rétreint ou en diamètre supérieur ;
- d'autre part, la présence des fils de renfort longitudinaux parallèles régulièrement répartis sur une génératrice, qui, quelles que soient les formes, convergent vers un sommet, ce qui à ce jour, n'était possible que manuellement.

Comme déjà dit, l'invention concerne également un dispositif pour la fabrication d'une armature textile tubulaire de renfort du type en question, constituée par un empilement de nappes successives de fls parallèles, qui permette la réalisation de cette armature de manière économique et automatique. Ce dispositif se caractérisé en ce qu'il comprend :
- un bâti comportant en son centre une fonture cylindrique avec son jeu d'aiguilles disposé sur la circonférence de la fonture, un mécanisme actionne le mouvement des aiguilles ;
- un cylindre coaxial extérieur à la fonture, portant une pluralité de passe-fils destinés à recevoir des fils de liage issus d'une pluralité de bobines fixes solidaires du bâti ;
- un mécanisme de commande des passe-fils synchronisé avec le mouvement des aiguilles pour la formation de la maille ;
- une couronne centrale, rotative autour de l'axe longitudinal de la fonture, portant une pluralité de bobines alimentant en fils de renfort guidés jusqu'au niveau des aiguilles, pour former une première nappe de fils parallèles jointifs disposés en hélice ;
- une couronne périphérique externe, coaxiale à la fonture et à la couronne centrale, rotative autour de l'axe longitudinal de la fonture, mais en sens inverse de celui de la couronne centrale, portant une pluralité de bobines alimentant en fils de renfort les aiguilles de la fonture pour former une seconde nappe de fils parallèles jointifs disposés en hélice de pas inverse à celui de la première nappe ;
- une couronne fixe intermédiaire, disposée entre la couronne centrale et la couronne périphérique externe rotatives, portant une pluralité de bobines alimentant en fils de renfort les aiguilles de la fonture pour former une nappe de fils intermédiaires parallèles jointifs, disposés selon les génératrices de la fonture ;
- un mécanisme de tirage et d'enroulement de l'armature textile tubulaire ainsi formée ;
- la couronne centrale et la couronne périphérique externe rotatives sont entraînées ou non à la même vitesse angulaire ;
- le cylindre coaxial fixe central est fixé au bâti par des consoles qui portent les passe-fils et les bobines de fils de liage.

La manière dont l'invention peut être réalisée et les avantages qui en découlent, ressortiront mieux de l'exemple de réalisation qui suit, à l'appui des figures annexées, dans lesquelles :

La figure 1 est une vue à caractère schématique montrant l'armature textile tubulaire selon l'invention.

Les figures 2 et 3 montrent des exemples nullement limitatifs de déformation de l'armature textile tubulaire illustrée figure 1.

La figure 4 est une vue partielle à très grande échelle, montrant le principe le liage des différentes nappes pour permettre une certaine déformation de l'ensemble.

La figure 5 est une vue à caractère schématique montrant un exemple de réalisation du dispositif pour la fabrication de l'armature textile tubulaire selon l'invention.

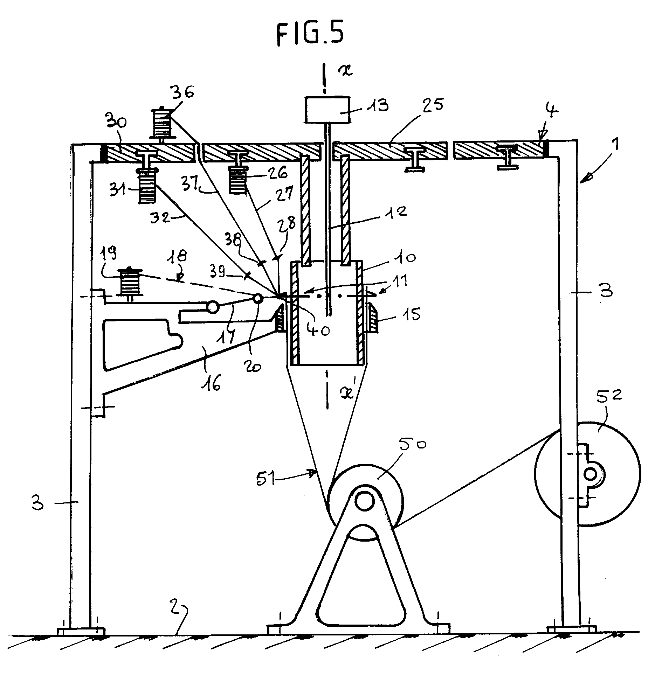

Comme le montre la figure 5, le dispositif selon l'invention comprend tout d'abord un bâti désigné par la référence générale (1), posé à même le sol (2), présentant des éléments supports verticaux (3) et un dessus horizontal (4).

Le bâti comporte en son centre une fonture cylindrique (10) qui porte des aiguilles (11). Ces aiguilles (11) sont disposées sur toute la circonférence du cylindre (10) dans un plan horizontal. Une commande (12) connue, actionnée par un mécanisme (13), actionne la rentrée et la sortie des aiguilles (11).

Un second cylindre (15) coaxial et extérieur à la fonture (10), est fixé au bâti par des consoles (16) solidaires des éléments supports verticaux (3). Ces consoles portent des passe-fils de liage (17) alimentés par des fils de liage proprement dits (18), déroulés à partir de bobines (19) fixes, solidaires de la console (16). Ce fil de liage (18), après avoir traversé l'oeillet (20) du passe-fils (17) , vient en regard des aiguilles (11) pour lier les nappes au fur et à mesure de la formation des mailles.

Les passe-fils (17) sont commandés et actionnés par un mécanisme classique non représenté, qui agit en synchronisme avec la commande (13).

Le dessus horizontal (4) du dispositif comporte une couronne centrale (25) rotative autour de l'axe d'entraînement vertical (X-X′) de la fonture (10). Cette couronne centrale (25) est entraînée en rotation.

L'entraînement en rotation de la couronne (25) s'effectue en synchronisme avec les autres mouvements, par tout moyen connu et approprié, tels que pignons et couronnes dentées, moteurs pas à pas...

Cette couronne centrale (25) présente sur sa face inférieure, des bobines (26) alimentant en fil (27) des éléments de guidage (28) jusqu'aux aiguilles (11) pour former une première nappe (100) de fils parallèles jointifs disposés en hélice par rapport à la génératrice de la fonture (10).

Une couronne périphérique externe (30) coaxiale à la fonture (10) et à la couronne centrale (25), rotative autour de l'axe longitudinal de la fonture, mais en sens inverse de celui de la couronne centrale, porte une pluralité de bobines (31) d'alimentation en fil de renfort (32) pour former une seconde nappe (110) de fils parallèles jointifs disposés également en hélice, mais de pas inverse de celui de la première nappe (100).

Comme précédemment, l'entraînement de la couronne (30) s'effectue par tout moyen connu et approprié. De même, la réalisation de cette nappe (110) s'effectue dans les mêmes conditions que la nappe (100), c'est-à-dire avec également des éléments de guidage.

En jouant sur les vitesses de rotation angulaire des deux couronnes (25) et (30), on peut faire varier l'inclinaison du pas de chacune des hélices (100,110). A noter que les pas de chacune des hélices (100, 110) sont égaux ou non.

Ce dispositif comprend également, disposée entre les deux couronnes rotatives, respectivement centrale (25) et périphérique (30), une pluralité de bobines (36), alimentant en fil de renfort (37) les éléments de guidage (38) jusqu'aux aiguilles (11) de la fonture pour former une nappe de fils intermédiaire (120) parallèles jointifs disposés selon les génératrices de la fonture.

Comme on le comprend, les trois nappes (100, 110, 120) caractéristiques de l'invention, toutes trois formées d'une nappe de fils parallèles jointifs, mais respectivement inclinés en hélice droite (100), en hélice gauche (110) et en fils parallèles (120), sont alimentés aux éléments de guidage (28, 38 39) pour venir au point de convergence (40) au niveau des aiguilles (11). Ce point de convergence est connu par l'homme du métier sous le nom de point de fabrication.

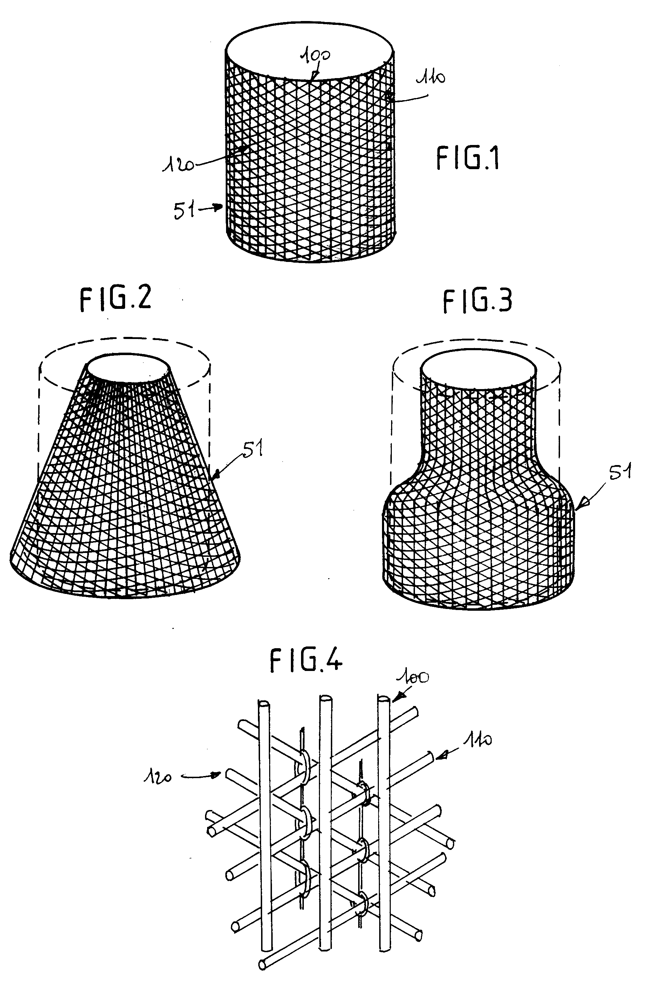

Selon une caractéristique importante de l'invention, le piquage des aiguilles au travers des nappes (100, 110, 120) s'effectue sans perforer et sans traverser les fils de renfort (27, 32, 37) pour permettre une certaine déformation de l'ensemble. Chaque fils de renfort peut glisser dans les boucles des mailles formées par les fils de liage (18). On renvoie à la figure 4, qui montre le principe de liage des différentes nappes.

Le dispositif comprend un système de tirage connu (50) pour appeler l'armature textile formée (51) et la renvider sous forme de bobine (52). Le moteur d'entraînement non représenté de la bobine d'enroulage (52), agit en synchronisme avec le mécanisme de commande (13).

Le dispositif selon l'invention permet de réaliser de manière économique et automatique des armatures textiles tubulaires multidirectionnelles :
- dans lesquelles les fils de liage ne retiennent pas dans leur glissement, les fils de chaque nappe,
- dans lesquelles les nappes de fils élémentaires n'ont pas d'interférences entre elles et ont chacune leur propre direction et leur propre nature,
- dans lesquels la géométrie tubulaire est variable,
- cette armature peut être réalisée dans les fils plus variés, naturels, synthétiques, filaments continus, fibres, mèches, etc, et peut recevoir les applications les plus variées dans le domaine du matériau composite,
- la capacité des bobines, la structure et la géométrie des machines, permettent d'obtenir des structures tubulaires de grands diamètres.

## Revendications

1. Armature textile tubulaire pour le renforcement de matériaux, constituée par un empilement de nappes successives de fils parallèles liées entre elles, caractérisée en ce qu'elle comprend :
- une première nappe cylindrique unidirectionnelle (27) formée d'une pluralité de fils parallèles jointifs disposés en hélice par rapport à l'axe longitudinal du cylindre ;
- au moins une deuxième nappe cylindrique unidirectionnelle (32), également formée d'une pluralité de fils parallèles jointifs disposés en hélice, mais dont le pas est de sens contraire au pas de l'hélice défini par la première nappe ;
- une pluralité de fils de liage (18), disposés parallèlement à la génératrice du cylindre défini par ces deux nappes, pour lier entre elles les fils de renfort de la première et de la deuxième nappe, sans toutefois perforer ou traverser lesdits fils de renfort.

2. Armature selon la revendication 1, caractérisée en ce que les pas de l'hélice de la première et de la deuxième nappes (100,101) sont inverses, en étant égaux ou non.

3. Armature selon l'une quelconque des revendications 1 et 2, caractérisée en ce qu'elle comporte une troisième nappe (37) de fils de renfort jointifs parallèles entre eux et à la génératrice du cylindre, disposés entre la première et la deuxième nappe.

4. Armature selon l'une quelconque des revendications 1 à 3, caractérisée en ce qu'elle comporte une quatrième nappe de fils jointifs enroulés en hélice.

5. Dispositif pour la fabrication d'une armature textile tubulaire du renfort, constituée par un empilement de nappes successives de fils parallèles, caractérisé en ce qu'il comprend :
- un bâti (1) comportant en son centre une fonture cylindrique (10) avec son jeu d'aiguilles (11) disposé sur la circonférence de la fonture (10), un mécanisme actionne le mouvement des aiguilles ;
- un cylindre coaxial extérieur à la fonture, portant une pluralité de passe-fils (38) destinés à recevoir des fils de liage issus d'une pluralité de bobines fixes (31) solidaires du bâti (1);
- un mécanisme de commande des passe-fils (38) synchronisé avec le mouvement des aiguilles pour la formation de la maille ;
- une couronne centrale (25), rotative autour de l'axe longitudinal de la fonture (10), portant une pluralité de bobines alimentant en fils de renfort guidés jusqu'au niveau des aiguilles (11), pour former une première nappe de fils parallèles jointifs disposés en hélice ;
- une couronne périphérique externe (30), coaxiale à la fonture et à la couronne centrale (25), rotative autour de l'axe longitudinal de la fonture (10), mais en sens inverse de celui de la couronne centrale (25), portant une pluralité de bobines alimentant en fils de renfort les aiguilles (11) de la fonture (10) pour former une seconde nappe de fils parallèles jointifs disposés en hélice de pas inverse à celui de la première nappe ;
- une couronne fixe intermédiaire (35), disposée entre la couronne centrale (25) et la couronne périphérique externe (30) rotatives, portant une pluralité de bobines alimentant en fils de renfort les aiguilles (11) de la fonture (10) pour former une nappe de fils intermédiaires parallèles jointifs, disposés selon les génératrices de la fonture (10) ;
- un mécanisme de tirage et d'enroulement de l'armature textile tubulaire ainsi formée ;

6. Dispositif selon la revendication 5, caractérisé en ce que la couronne centrale (25) et la couronne périphérique externe (30) rotatives sont entraînées ou non à la même vitesse angulaire.

7. Dispositif selon la revendication 5, caractérisé en ce que le cylindre coaxial fixe central est fixé au bâti par des consoles qui portent les passe-fils (38) et les bobines de fils de liage.

## Claims

1. Tubular fabric for materials reinforcement made of stacked sheets of parallel linked yarn characterized in that it comprises:
- a first cylindrical sheet (27) consisting of a great many parallel, unidirectional and contiguous yarns arranged as a helix relative to the longitudinal axis of the cylinder;
- at least a second cylindrical sheet (32), likewise consisting of a great many parallel, unidirectional and contiguous yarns arranged as a helix but whose pitch runs contrary to that of the first sheet;
- a great many binder yarns (18) arranged in parallel to the generatrix of the cylinder formed by these two sheets, linking the reinforcing yarns of the first and second sheet, without, however, perforating or traversing said reinforcing yarns.

2. Fabric as claimed in claim 1, characterized in that the pitches of the first and second sheet helixes (100, 101), whether equal or not, are inverted;

3. Fabric as claimed in any of claims 1 and 2, characterized in that it comprises a third sheet (37) of contiguous reinforcing yarns running both parallel to one another and the cylinder's generatrix placed between the first and the second sheet.

4. Fabric as claimed in any of claims 1 through 3, characterized in that it comprises a fourth sheet of contiguous, helix-wound yarns.

5. Device for manufacturing tubular fabric for materials reinforcement made of stacked sheets of parallel yarns, characterized in that it comprises:
- a frame (1) with a cylindrical needle bed (10) in its center, the bed being equipped with a set of needles (11) arranged on its circumference, it being understood that the needles are actuated mechanically;
- an outer cylinder arranged coaxially to the needle bed, carrying a great many yarn feeders (38) through which are run the binder yarns wound on a great many bobbins (31) that are fastened to the frame (1);
- a system controlling the yarn feeders (38) synchronized with the knitting needles;
- a centrally located crown (25) rotating around the longitudinal axis of the needle bed (10), carrying a great many bobbins supplying the needles (11) knitting a first sheet of contiguous, parallel and linked yarns arranged as a helix with reinforcing yarn;
- a peripheral, outer crown (30) coaxial to the needle bed and the centrally located crown (25), rotating around the longitudinal axis of the needle bed (10), but in a direction opposite that of the central crown (25), carrying a great many bobbins supplying the needles (11) of the needle bed (10) knitting a second sheet of contiguous, parallel and linked yarns arranged as a helix with reinforcing yarn, the pitch of the helix being inverted in relation to that of the first sheet's helix;
- a fixed, intermediate crown (35) between the rotary central crown (25) and the peripheral, outer crown (30), carrying a great many bobbins supplying the needles (11) of the needle bed (10) knitting a sheet of intermediate, contiguous and parallel yarns arranged along the generators of needlebed (10) with reinforcing yarn;
- a system pulling and winding the tubular fabric thus formed;

6. Device as claimed in claim 5, characterized in that the rotary central crown (25) and the peripheral, outer crown (30) are driven or not at the same angular speed;

7. Device as claimed in claim 5, characterized in that the fixed central coaxial cylinder is fastened to the frame by brackets carrying the yarn feeders (38) and the binder yarn bobbins.

## Patentansprüche

1. Rohrförmige Textilbewehrung für die Verstärkung von Werkstoffen bestehend aus einer Aufschichtung aufeinanderfolgender Materialbahnen aus parallelen, miteinander verbundenen Garnen, dadurch gekennzeichnet, daß sie folgende Bestandteile umfaßt:
- eine erste in einer Richtung verlaufende zylindrische Materialbahn (27), gebildet aus mehreren parallelen aneinanderstoßenden Garnen, die gegenüber der Längsachse des Zylinders schraubenförmig angeordnet sind;
- mindestens eine zweite in einer Richtung verlaufende zylindrische Materialbahn (32), ebenfalls gebildet aus mehreren parallelen aneinanderstoßenden Garnen, die schraubenförmig angeordnet sind, deren Steigung jedoch gegenläufig zur Schraubensteigung der ersten Materialbahn verläuft;
- mehrere Bindefäden (18), die parallel zur Mantellinie des durch die beiden Materialbahnen beschriebenen Zylinders angeordnet sind, um die Verstärkungsgarne der ersten und zweiten Materialbahn miteinander zu verbinden, ohne diese Verstärkungsgarne jedoch zu durchbohren oder zu durchqueren.

2. Bewehrung nach Anspruch 1, dadurch gekennzeichnet, daß die Schraubensteigungen der ersten und der zweiten Materialbahn (100, 101) umgekehrt sind, wobei sie gleich oder verschieden sein können.

3. Bewehrung nach einem der Ansprüche 1 und 2, dadurch gekennzeichnet, daß sie eine dritte Materialbahn (37) aus aneinanderstoßenden Verstärkungsgarnen umfaßt, die untereinander und zur Mantellinie des Zylinders parallel verlaufen und zwischen der ersten und zweiten Materialbahn angeordnet sind.

4. Bewehrung nach einem der Ansprüche 1 - 3, dadurch gekennzeichnet, daß sie eine vierte Materialbahn aus aneinanderstoßenden Garnen umfaßt, die schraubenförmig aufgewickelt sind.

5. Vorrichtung für die Herstellung einer rohrförmigen verstärkenden Textilbewehrung bestehend aus einer Aufschichtung aufeinanderfolgender Materialbahnen aus parallelen Garnen, dadurch gekennzeichnet, daß sie folgende Teilelemente umfaßt:
- ein Gestell (1), das in der Mitte ein Nadelbett (10) mit seinem Nadelsatz (11) besitzt, der am Umfang des Nadelbettes (10) angeordnet ist, wobei ein Getriebe die Nadeln bewegt;
- einen außerhalb des Nadelbettes liegenden koaxialen Zylinder mit mehreren Fadenführungen (38) für die Aufnahme der Bindefäden aus mehreren orstfesten Spulen (31), die mit dem Gestell (1) fest verbunden sind;
- einen Antriebsmechanismus der Fadenführungen (38), der mit der Bewegung der Nadeln für die Maschenbildung synchronisiert ist;
- einen in der Mitte liegenden Kranz (25), der sich um die Längsachse des Nadelbettes (10) dreht und mehrere Spulen trägt, die den Nadeln (11) geführte Verstärkungsgarne zuführen, um eine erste Materialbahn aus parallelen, aneinanderstoßenden, schraubenförmig angeordneten Garnen zu bilden;
- einen außenliegenden Randkranz (30), der koaxial zum Nadelbett und zum mittleren Kranz (25) angebracht ist und sich um die Längsachse des Nadelbettes (10) dreht, aber in umgekehrter Richtung zu derjenigen des mittleren Kranzes (25), und der mehrere Spulen trägt, die die Nadeln (11) des Nadelbettes (10) mit Verstärkungsgarnen versorgen, um eine zweite Materialbahn aus parallelen, aneinanderstoßenden, schraubenförmig angeordneten Garnen zu bilden, wobei die Schraubensteigung umgekehrt zu derjenigen der ersten Materialbahn verläuft;
- einen ortsfesten Zwischenranz (35) zwischen dem in der Mitte liegenden (25) und dem am Außenrand angebrachten Drehkranz (30), der mehrere Spulen trägt, die die Nadeln (11) des Nadelbettes (10) mit Verstärkungsgarnen versorgen, um eine Materialbahn aus parallelen aneinanderstoßenden Zwischengarnen zu bilden, die gemäß den Mantellinien des Nadelbettes (10) angeordnet sind;
- einen Mechanismus für das Abziehen und Aufrollen der so gebildeten rohrförmigen Textilbewehrung;

6. Vorrichtung nach Anspruch 5, dadurch gekennzeichnet, daß der in der Mitte liegende (25) und der am Außenrand angebrachte Drehkranz (30) mit der gleichen Winkelgeschwindigkeit angetrieben werden oder nicht.

7. Vorrichtung nach Anspruch 5, dadurch gekennzeichnet, daß der mittlere, ortsfeste, koaxiale Zylinder durch Konsolen am Gestell befestigt ist, welche die Fadenführungen (38) und die Bindefadenspulen tragen.
